# EUROPÄISCHE PATENTSCHRIFT

(11) **EP 0 310 559 B1**
(45) Veröffentlichungstag und Bekanntmachung des Hinweises auf die Patenterteilung: **09.03.1994**
(21) Anmeldenummer: 88810657.2
(22) Anmeldetag: 26.09.1988
(51) Int. Cl.: C07F 9/40

(54) **Verfahren zur Herstellung von Alkalimetallsalzen von Phosphonsäuremonoalkylestern**
Process for preparing alkali metal salts of monoalkyl esters of phosphonic acids
Procédé de préparation de sels alcalins d'esters monoalcoyles d'acides phosphoniques

(30) Priorität: 01.10.1987 CH 3824/87
(43) Veröffentlichungstag der Anmeldung: 05.04.1989
(73) Patentinhaber: CIBA-GEIGY AG, 4002 Basel (CH)
(72) Erfinder: Weis, Claus D., Dr., CH-4148 Pfeffingen (CH); Sutter, Peter, CH-4132 Muttenz (CH)

(56) Entgegenhaltungen:
- INORGANICA CHIMICA ACTA, Band 3, Nr. 4, 31. Dezember 1969, Seiten 523-526; C.M. MIKULSKI et al.: "Interactions of neutral phosphonate esters with metal halides"
- JOURNAL OF THE INDIAN CHEMICAL SOCIETY, Band XLIX, Nr. 1, Januar 1972, Seiten 77-81, The Indian Chemical Society; D.M. PURI et al.: "Metal derivatives of dialkyl phosphites - part I"

## Beschreibung

Die vorliegende Erfindung betrifft ein neues Verfahren zur Herstellung von Alkalimetallsalzen von Phosphonsäuremonoalkylestern.

Die Herstellung des Natriumsalzes des Methan-phosphonsäure-monomethylesters durch partielle alkalische Hydrolyse des Methanphosphonsäure-dimethylesters in Wasser oder in einem Dioxan-Wasser-Gemisch mittels Natronlauge ist aus H. Cristol, M. Levy und C. Marty, J. Organometallic Chem. 12, 459 (1968) bekannt.

Im Journal of General Chemistry of the USSR, 50(1), S. 31-34 (1980) wird die Reaktion von Trimethylphosphit mit Natriumiodid beschrieben. Bei diesem Verfahren wird Aceton als Lösungsmittel verwendet. Die Reaktionszeit beträgt 40 Stunden.

Es wurde nun ein Verfahren gefunden, welches erlaubt Alkalimetallsalze von Phosphonsäuremonoalkylestern in einfacher und wirtschaftlicher Weise herzustellen.

Das erfindungsgemässe Verfahren zur Herstellung von Alkalimetallsalzen von Phosphonsäuremonoalkylestern der Formel 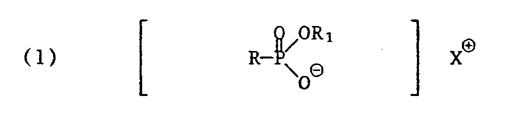
worin
- R: geradkettiges oder verzweigtes C₁-C₂₀-Alkyl,
- R₁: C₁-C₄-Alkyl und
- X: ein Alkalimetallkation
bedeuten, ist dadurch gekennzeichnet, dass man ein Mol eines Phosphonsäureesters der Formel 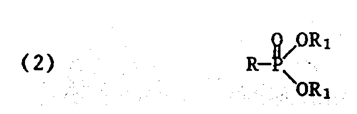
worin R und R₁ die oben angegebene Bedeutung haben mit einem Mol eines feingemahlenen Alkalimetallhalogenides der Formel

(3) XY

worin
- X: ein Alkalimetallkation und
- Y: ein Halogenanion
bedeuten, bei einer Temperatur zwischen 30 und 220°C in Abwesenheit eines Lösungsmittels und innerhalb von 30 Minuten bis 3 Stunden umsetzt.

Die erfindungsgemäss umzusetzenden Alkalimetallhalogenide müssen in feinverteilter Form vorliegen. Dies wird damit erreicht, dass die Alkalimetallhalogenide in einer Kugelmühle solange zermahlt werden bis die Teilchengrösse im Durchschnitt 30-50 µ beträgt.

Die Umsetzung mit dem Alkalimetallhalogenid erfolgt vorzugsweise bei einer Temperatur zwischen 50 und 180°C je nach verwendetem Halogenid.

Von Interesse ist das Verfahren, worin ein Phosphonsäureester der Formel (2), in welcher R C₁-C₄-Alkyl bedeutet und ein Alkalimetallhalogenid der Formel (3), in welcher X Lithium, Natrium oder Kalium und Y Chlor, Brom oder Jod bedeuten verwendet werden.

Als Alkalimetallhalogenide kommen besonders das Natrium- und Kaliumchlorid in Betracht.

Von ganz besonderem Interesse ist das Verfahren, worin ein Phosphonsäureester der Formel (2), in welcher R und R₁ Methyl bedeuten, mit Natriumchlorid umgesetzt wird. Das dabei entstehende Methylchlorid kann dann als technisches Methylierungsmittel eingesetzt werden.

Im erfindungsgemässen Verfahren wird der Phosphonsäureester vorteilhaft in einem 5 bis 60 %-igen, vorzugsweise 20-50 %-igen Ueberschuss eingesetzt, wenn ein Kalium- oder Natriumhalogenid verwendet wird.

Erfindungsgemäss herstellbare Alkalimetallsalze der Formel (1) worin R geradkettiges oder verzweigtes unsubstituiertes C₁-C₂₀-Alkyl und R₁ C₁-C₄-Alkyl bedeuten, sind als Emulgatoren für wässrige Kunststoffdispersionen (vgl. z.B. US-A-4,233,198) anwendbar und solche worin R C₁-C₄-Alkyl und R₁ C₁-C₄-Alkyl bedeuten, werden als Flammschutzmittel verwendet.

In der US-A-4,251,492 sind erfindungsgemäss herstellbare Alkalimetallsalze der Formel (1) beschrieben, worin R C₁-C₇-Alkyl und R₁ Wasserstoff, Methyl oder Ethyl bedeuten. Diese Salze werden als Komplexbildner in Lösungen zur Entfernung von H₂S aus Gasen oder flüssigen Kohlenwasserstoffen verwendet.

Die nachfolgenden Beispiele erläutern das erfindungsgemässe Verfahren. Darin beziehen sich Prozentangaben, sofern nichts anderes angegeben, auf das Gewicht.

### Beispiel 1

11,6 g fein gepulvertes Natriumchlorid werden unter Rühren in 80 ml Dimethylmethanphosphonat dispergiert und unter Rühren während 50 Minuten zum Rückfluss erhitzt. Das entstehende Methylchlorid wird abgeleitet und das überschüssige Dimethylmethanphosphonat bei schwachem Vakuum abdestilliert. Man erhält 26,6 g (Theorie: 26,4 g) eines kristallinen Rückstandes, der mit 30 ml Toluol versetzt wird. Das erhaltene Salz wird abfiltriert und im Vacuum bei 100°C getrocknet. Man erhält 26 g (98 % d. Th.) des Natriumsalzes der Formel 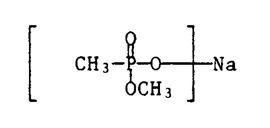
von einem Smp. von 315-320°C.

### Beispiel 2

5,9 g fein gepulvertes Natriumchlorid werden unter Rühren in 80 ml Diethylmethanphosphonat dispergiert und unter Rühren während zwei Stunden auf 180°C erhitzt. Die Klare farblose Lösung wird am rotierenden Verdampfer bei vermindertem Druck (26 mbar) eingedampft. Der weisse kristalline Rückstand wird in 120 ml heissem Methanol gelöst und durch Filtration von ungelösten Anteilen befreit. Das Filtrat wird zur Trockene eingedampft und der weisse Rückstand mit 50 ml eines gemisches von Diethylether/Aceton (1:1) gerührt, filtriert und getrocknet. Man erhält 12,25 g (84 % d. Th.) des Natriumsalzes der Formel 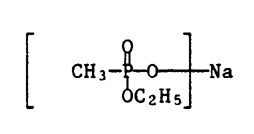
von einem Smp. von 183-186°C.

### Beispiel 3

7,45 g fein gepulvertes Kaliumchlorid werden unter Rühren in 150 ml Dimethylmethanphosphonat dispergiert und während 60 Minuten zu schwachem Rückfluss erhitzt. Nach dieser Zeit ist die Entwicklung von Methylchlorid beendet. Dann wird das überschüssige Dimethylmethanphosphonat bei schwachem Vakuum abdestilliert und der Rückstand mit einer Mischung aus 30 ml Aceton und 30 ml Diethylether 5 Minuten lang gerührt, und die Dispersion abfiltriert. Man erhält 10,4 g (70 % d. Th.) des Kaliumsalzes der Formel 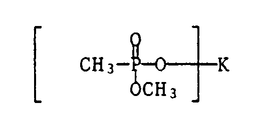
von einem Smp. von 215-218°C.

### Beispiel 4

8,48 g feingemahlenes Lithiumchlorid werden unter Rühren in 300 ml Dimethylmethanphosphonat dispergiert und unter Rühren während 60 Minuten zum Rückfluss erhitzt. Dann wird das überschüssige Dimethylmethanphosphonat bei schwachem Vakuum am rotierenden Verdampfer abdestilliert und der Rückstand bis zur Trockene eingedampft. Die weissen Kristalle werden anschliessend in 150 ml Diethylether verrührt, abfiltriert und auf dem Filter mit 100 ml Diethylether gewaschen, und anschliessend im Vakuum vom anhaftenden Lösungsmittel befreit. Man erhält 17,7 g (76 % d. Th.) des Lithiumsalzes der Formel 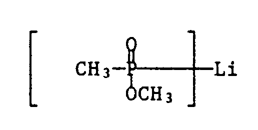
vom Smp. > 300°C.

### Beispiel 5

16,75 g fein gemahlenes Lithiumiodid werden unter Rühren in 150 ml Dimethylmethanphosphonat dispergiert und unter Rühren auf 120°C während 1 Stunde erwärmt. Dann wird die weisse Suspension bei vermindertem Druck am rotierenden Verdampfer zur Trockene eingedampft. Zum Rückstand gibt man 50 ml einer Mischung aus Aceton und Diethylether (1:1). Die zurückbleibenden Kristalle werden abfiltriert und im Vakuum bei 100°C getrocknet. Man erhält 5,5 g des Lithiumsalzes der Formel 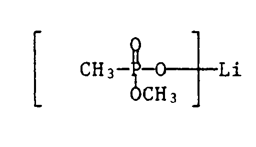
vom Smp. > 300°C.

### Beispiel 6

4,24 g fein gemahlenes Lithiumchlorid werden unter Rühren in 80 ml Diethylmethanphosphonat dispergiert und unter Rühren während 30 Minuten zum Rückfluss erhitzt. Nach beendeter Gasentwicklung wird das Diethylmethanphosphonat bei schwachem Vakuum abdestilliert. Man erhält einen weissen kristallinen Rückstand, der mit 50 ml einer Mischung aud Diethylether/Aceton (1:1) versetzt wird. Die verbleibenden Kristalle werden abfiltriert, und man erhält 7,8 g (60 % d. Th.) des Lithiumsalzes der Formel 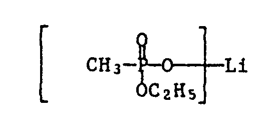
vom Smp. > 300°C.

### Beispiel 7

17,4 g fein gemahlenes Lithiumbromid werden unter Rühren in 300 ml Dimethylmethanphosphonat dispergiert und unter Rühren während 1 Stunde auf 160°C erhitzt. Dann wird das überschüssige Dimethylmethanphosphonat am rotierenden Verdampfer bei schwachem Vakuum abdestilliert. Der Rückstand wird mit 300 ml einer Mischung aus Aceton/Dimethylether (1:1) 5 Minuten lang gerührt. Die Dispersion wird anschliessend filtriert und mit 50 ml einer Mischung aus Aceton/Dimethylether (1:1) gewaschen. Man erhält 20,2 g (87,5 % d. Th.) des Lithiumsalzes der Formel 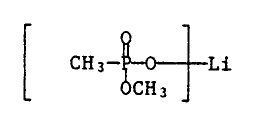
vom Smp. > 300°C.

### Beispiel 8

20,6 g fein gemahlenes Natriumbromid werden unter Rühren in 300 ml Dimethylmethanphosphonat dispergiert und unter Rühren während 1 Stunde zum Sieden erhitzt. Danach wird das überschüssige Dimethylmethanphosphonat im schwachen Vakuum (26 mbar) bei 110°C abdestilliert. Der kristalline Rückstand wird mit einer Mischung von 70 ml Aceton und 30 ml Diethylether verrührt und anschliessend werden die Kristalle abfiltriert und getrocknet. Man erhält 18,6 g (70,5 % d. Th.) des Natriumsalzes der Formel 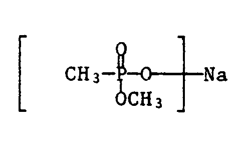
vom Smp. 315-320°C.

### Beispiel 9

11,6 g fein gemahlenes Natriumchlorid werden unter Rühren in 80 ml Diethylethanphosphonat dispergiert und unter Rühren auf 220°C während 3 Stunden erwärmt. Der Ueberschuss an Diethylethanphosphonat wird dann am rotierenden Verdampfer abdestilliert. Das zurückbleibende Oel kristallisiert im Verlaufe von 4 Wochen. Die entstandenen Kristalle werden zweimal mit jeweils einer Mischung von Aceton/Diethylether (3:1) verrührt, abfiltiert und anschliessend mit 50 ml Aceton gewaschen. Das anhaftende Lösungsmittel wird im Vakuum entfernt. Man erhält 27 g (84 % d. Th.) des Natriumsalzes der Formel 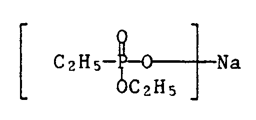
vom Smp. 150°C.

## Patentansprüche

1. Verfahren zur Herstellung von Alkalimetallsalzen von Phosphonsäuremonoalkylestern der Formel 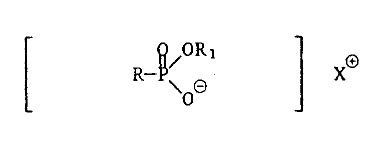 worin
R geradkettiges oder verzweigtes C₁-C₂₀-Alkyl,
R₁ C₁-C₄-Alkyl und
X ein Alkalimetallkation
bedeuten, dadurch gekennzeichnet, dass man ein Mol eines Phosphonsäureesters der Formel 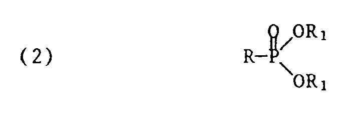 worin R und R₁ die oben angegebene Bedeutung haben mit einem Mol eines feingemahlenen Alkalimetallhalogenides der Formel
(3) XY
worin
X ein Alkalimetallkation und
Y ein Halogenanion
bedeuten, bei einer Temperatur zwischen 30 und 220°C in Abwesenheit eines Lösungsmittels und innerhalb von 30 Minuten bis 3 Stundenumsetzt.

2. Verfahren gemäss Anspruch 1 worin R C₁-C₄-Alkyl, X Lithium, Natrium oder Kalium und Y Chlor, Brom oder Jod bedeuten.

3. Verfahren gemäss Anspruch 1, dadurch gekennzeichnet, dass man die Umsetzung bei einer Temperatur zwischen 50 und 180°C vornimmt.

4. Verfahren gemäss Anspruch 2 worin X Natrium oder Kalium und Y Chlor bedeuten.

5. Verfahren gemäss Anspruch 4, dadurch gekennzeichnet, dass der Phosphonsäureester in einem 5 bis 60 %-igen Ueberschuss verwendet wird.

## Claims

1. A process for the preparation of an alkali metal salt of a phosphonic acid monoalkyl ester of formula 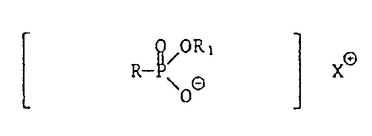 in which
R is straight-chain or branched C₁-C₂₀alkyl,
R₁ is C₁-C₄alkyl, and
X is an alkali metal cation,
which comprises reacting one mole of a phosphonic acid ester of formula 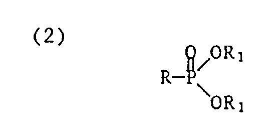 in which R and R₁ are as defined above, with one mole of a finely ground alkali metal halide of formula
(3) XY
in which
X is an alkali metal cation, and
Y is a halogen anion,
in the temperature range from 30 to 220°C in the absence of a solvent and in the course of from 30 minutes to 3 hours.

2. A process according to claim 1, in which R is C₁-C₄alkyl, X is lithium, sodium or potassium, and Y is chlorine, bromine or iodine.

3. A process according to claim 1, wherein the reaction is carried out in the temperature range from 50 to 180°C

4. A process according to claim 2, in which X is sodium or potassium and Y is chlorine.

5. A process according to claim 4, wherein a 5 to 60 % excess of the phosphonic acid ester is used.

## Revendications

1. Procédé de préparation de sels de métal alcalin et d'ester monoalkylique d'acide phosphonique, de formule 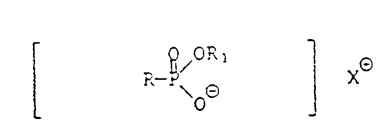 dans laquelle
R représente un groupe alkyle en C₁₋₂₀ linéaire ou ramifié,
R₁ représente un groupe alkyle en C₁₋₄, et
X représente un cation de métal alcalin,
caractérisé en ce que l'on fait réagir une mole d'un ester d'acide phosphonique de formule 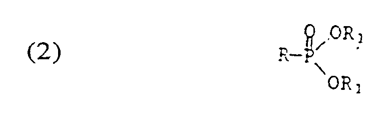 dans laquelle R et R₁ ont les significations indiquées ci-dessus, avec une mole d'un halogénure de métal alcalin finement broyé, de formule
(3) XY
dans laquelle X représente un cation de métal alcalin et Y représente un anion halogénure,
à une température située entre 30°C et 220°C, en l'absence de solvant et pendant un laps de temps de 30 minutes à 3 heures.

2. Procédé conforme à la revendication 1, dans lequel R représente un groupe alkyle en C₁₋₄, X représente un ion de lithium, sodium ou potassium et Y représente un ion de chlore, brome ou iode.

3. Procédé conforme à la revendication 1, caractérisé en ce que l'on effectue la réaction à une température située entre 50°C et 180°C.

4. Procédé conforme à la revendication 2, dans lequel X représente un ion de sodium ou potassium et Y représente un ion de chlore.

5. Procédé conforme à la revendication 4, caractérisé en ce qu'on utilise un excès de 5 % à 60 % de l'ester d'acide phosphonique.
